# EUROPÄISCHE PATENTSCHRIFT

(11) **EP 3 762 632 B1**
(45) Veröffentlichungstag und Bekanntmachung des Hinweises auf die Patenterteilung: **29.06.2022**
(21) Anmeldenummer: 19709853.6
(22) Anmeldetag: 27.02.2019
(51) Int. Cl.: F16H 61/02

(54) **GETRIEBESTEUERUNGSEINRICHTUNG**
TRANSMISSION CONTROLLER
ÉQUIPEMENT DE COMMANDE DE TRANSMISSION

(30) Priorität: 08.03.2018 DE 102018203503
(43) Veröffentlichungstag der Anmeldung: 13.01.2021
(73) Patentinhaber: Magna PT B.V. & Co. KG, 74199 Untergruppenbach (DE)
(72) Erfinder: BÜNDER, Carsten, 70563 Stuttgart (DE)
(74) Vertreter: Zangger, Bernd
(86) Internationale Anmeldenummer: PCT/EP2019/054860
(87) Internationale Veröffentlichungsnummer: WO 2019/170494

(56) Entgegenhaltungen:
- DE-A1- 10 327 438
- DE-A1-102015 226 392
- DE-A1-102016 214 600
- US-A1- 2002 058 566

## Beschreibung

### Gebiet der Erfindung

Die vorliegende Erfindung betrifft eine Getriebesteuerungseinrichtung für ein Kraftfahrzeug, zur Steuerung und/oder Regelung des Betriebs eines automatischen oder automatisierten Schaltgetriebes eines Kraftfahrzeuges.

### Stand der Technik

Getriebesteuerungseinrichtungen für Kraftfahrzeuge, zur Steuerung und/oder Regelung des Betriebs eines automatischen oder automatisierten Schaltgetriebes eines Kraftfahrzeuges, sind an sich bekannt. Dabei kann eine solche Getriebesteuerungseinrichtung abhängig von Zustandsdaten des Kraftfahrzeuges, wie zum Beispiel einer Motordrehzahl, automatisiert einen Gangwechsel von einem aktuellen Istgang zu einem vorteilhaften Sollgang durchgeführt werden.

Ein solcher Gangwechsel in einem Automatikgetriebe kann auch abhängig von einer aktuellen Position und einer Strecken- oder Richtungsinformation des Fahrzeuges, insbesondere auf Basis von Daten eines Navigationssystems durchgeführt oder unterlassen werden.

In einem Doppelkupplungsgetriebe kann durch eine solche Getriebesteuerungseinrichtung anstatt oder zusätzlich zu einem Wechsel des aktuell genutzten Ganges auch ein in einem lastfreien Zweig des Getriebes vorgewählter Gang, hier als Vorwahlgang bezeichnet, eingelegt oder gewechselt werden.

Die DE 101 29 149 A1 offenbart ein Verfahren zur Optimierung der Kraftübertragung eines Motors auf die Antriebsräder eines Fahrzeugs mittels eines Getriebes, wobei ein Navigationssystem Daten für die momentane Position des Fahrzeugs sowie Daten von der zu befahrenden vorausliegenden Fahrbahn an ein Steuergerät zur Motor- und/oder Getriebesteuerung liefert, und wobei das Steuergerät aus den Positions- und Straßendaten Sollwerte für die Motor- und/oder Getriebesteuerung (Antriebsstrang-Management) berechnet.

Aus der WO 2010/118917 A1 ist eine Getriebesteuerungseinrichtung zur Steuerung und/oder Regelung des Betriebs eines automatischen bzw. automatisierten Schaltgetriebes eines Kraftfahrzeugs bekannt, wobei eine Schaltstrategie der Getriebesteuerungseinrichtung auf Grundlage von Fahrzustandsdaten wie Fahrzeugmasse und/oder Fahrwiderstand und/oder Fahrzeugneigung und/oder Fahrzeuggeschwindigkeit und/oder Fahrzeugbeschleunigung und/oder Motordrehzahl und/oder Motormoment sowie auf Grundlage von Fahrerwunschdaten den Betrieb des Getriebes steuert und/oder regelt, wobei die Getriebesteuerungseinrichtung auf Basis von Topographiedaten einer aktuellen Position des Kraftfahrzeugs die Fahrzustandsdaten Fahrzeugmasse und/oder Fahrwiderstand und/oder Fahrzeugneigung fortlaufend aktuell berechnet.

Weitere Getriebesteuerungseinrichtungen mit einer optimierten Gangwechselstrategie sind aus der DE102016214600 A1 und der DE10327438 A1 bekannt.

### Zusammenfassung der Erfindung

Es ist eine Aufgabe der Erfindung, eine Getriebesteuerungseinrichtung der genannten Art zu verbessern und insbesondere eine Getriebesteuerungseinrichtung anzugeben, deren Gangwechselstrategie besser auf Fahrerwünsche bzw. ein individuelles Fahrerverhalten abgestimmt ist.

Die Lösung der Aufgabe erfolgt durch eine Getriebesteuerungseinrichtung für ein Kraftfahrzeug, zur Steuerung und/oder Regelung des Betriebs eines automatischen oder automatisierten Schaltgetriebes eines Kraftfahrzeuges, wobei durch die Getriebesteuerungseinrichtung abhängig von Zustandsdaten des Kraftfahrzeuges und/oder abhängig von einer aktuellen Position und einer Strecken- oder Richtungsinformation des Fahrzeuges, beispielsweise von einem Navigationssystem, ein Wechsel des Ganges durchgeführt wird, wobei von der Getriebesteuerungseinrichtung das Ereignis eines Fahrereingriffs, der einen Wechsel des Ganges erforderlich macht, zusammen mit der aktuellen Position und mit der aktuellen Strecken- oder Richtungsinformation des Kraftfahrzeuges gespeichert wird und bei einem nachfolgenden Befahren derselben Position und derselben Strecke oder Richtung derselbe Wechsel des Ganges auf Basis der gespeicherten Daten automatisiert durchgeführt wird.

Erfindungsgemäß wird eine Getriebesteuerungseinrichtung angegeben, die Vorgänge aus bereits absolvierten Streckenabschnitten abspeichern kann, insbesondere einen Eingriff des Fahrers des Kraftfahrzeuges, also ein Nutzungsverhalten des Kraftfahrzeuges, das einen Gangwechsel bewirkt. Ein derartiger von der Automatik zuvor nicht berücksichtigter Wechsel des Ganges kann bei einem nachfolgenden erneuten Befahren desselben Streckenabschnitts von der Getriebesteuerungseinrichtung auf Grund der abgespeicherten Daten zum zuvor erfolgten Fahrereingriff, automatisiert durchgeführt werden.

Die Getriebesteuerungseinrichtung ist somit dazu eingerichtet, aus den erfolgten Eingriffen in die Gangwahlstrategie zu "lernen", in dem streckenbezogen derartige Eingriffe abgespeichert und bei Befahren derselben Strecke wieder abgerufen und genutzt werden.

Die Getriebesteuerungseinrichtung wird somit im Laufe der Zeit selbsttätig immer stärker an die streckenbezogenen Gangwechselwünsche des Fahrers bzw. an dessen Fahrverhalten angepasst.

Vorzugsweise wird die aktuelle Position und/oder die aktuelle Strecken- oder Richtungsinformation des Kraftfahrzeuges durch ein Navigationssystem bereitgestellt.

Bevorzugt ist der Fahrereingriff, der einen Wechsel des Ganges erforderlich macht, eine Anforderung eines Drehmoments, einer Beschleunigung und/oder einer Geschwindigkeit, die mit dem aktuellen Gang nicht erreichbar ist, also insbesondere eine Anforderung eines höheren Drehmoments, Beschleunigung und/oder Geschwindigkeit als mit dem aktuellen Gang bzw. Vorwahlgang darstellbar oder auch eines niedrigeren Drehmoments, Beschleunigung und/oder Geschwindigkeit als mit dem aktuellen Gang darstellbar. Die Ausdrücke "erforderlich macht" und "nicht erreichbar" sind dabei so zu verstehen, dass der entsprechende Fahrerwunsch auch nur nicht technisch sinnvoll bzw. nicht ökonomisch erreichbar sein kann, auch wenn die Erreichung der Anforderung des Fahrers technisch nicht vollständig ausgeschlossen ist.

Der Fahrereingriff, der einen Wechsel des Ganges erforderlich macht, kann auch ein manueller Gangwechsel, also ein manueller Schaltvorgang, der vom Fahrer vorgenommen wurde, sein.

Erfindungsgemäß wird bei einem nachfolgenden Befahren derselben Position und derselben Strecke oder Richtung derselbe Gangwechsel auf Basis der gespeicherten Daten automatisiert durchgeführt wird, abhängig davon ob ein Fahrereingriff, der einen Wechsel des Ganges erforderlich macht, an der aktuellen Position und mit der aktuellen Strecken- oder Richtungsinformation mehrmals gespeichert wurde, nämlich bereits zu verschiedenen Zeitpunkten. Somit wird ein Gangwechsel beispielsweise nur dann automatisiert tatsächlich durchgeführt, wenn der selbe Eingriff im selben Streckenabschnitt vom Fahrer zuvor mehrmals, zum Beispiel mindestens 2 mal oder mindestens 3, 4 oder 5 mal, durchgeführt wurde und daher mehrmals gespeichert wurde bzw. ein entsprechender Zähler hochgezählt wurde.

Bevorzugt wird von der Getriebesteuerungseinrichtung, insbesondere beim Speichern eines manuellen Gangwechsels, zusätzlich eine Identifizierung des Fahrers oder Fahrertyps (zum Beispiel Sportlich, Ökonomisch etc) gespeichert. Bei einem nachfolgenden Befahren derselben Position und derselben Strecke oder Richtung kann dann derselbe Gangwechsel abhängig von einer Übereinstimmung einer Identifizierung des aktuellen Fahrers oder Fahrertyps mit der gespeicherten Identifizierung des Fahrers oder Fahrertyps automatisiert durchgeführt werden oder auch nicht durchgeführt werden. Insbesondere kann ein automatisierter Gangwechsel daher nur dann erfolgen, wenn der aktuelle Fahrer derselbe Fahrer ist, für welchen der oder die vorausgehenden Ereignisse gespeichert wurden, oder ein Fahrer desselben Typs.

Von der Getriebesteuerungseinrichtung kann zu jedem Ereignis des Fahrereingriffs, der einen Wechsel des Ganges erforderlich macht, beispielsweise gespeichert werden: der erforderliche Gang und/oder Daten über den auslösenden Fahrereingriff und/oder die aktuelle Position und/oder die aktuelle Strecken- oder Richtungsinformation des Kraftfahrzeuges und/oder ein Datum- und/oder Zeitstempel.

Gemäß einer Ausführungsform der Erfindung wird von der Getriebesteuerungseinrichtung das Ereignis eines Fahrereingriffs mit den darauf bezogenen Informationen in einem im Kraftfahrzeug liegenden Speicherbereich abgespeichert.

Alternativ oder zusätzlich kann von der Getriebesteuerungseinrichtung das Ereignis eines Fahrereingriffs, der einen Wechsel des Ganges oder des Vorwahlganges erforderlich macht, mit den zugehörigen Daten, beispielsweise zusammen mit der aktuellen Position und mit der aktuellen Strecken- oder Richtungsinformation des Kraftfahrzeuges, und bevorzugt mit einer Typenbezeichnung des Getriebes, des Motors und/oder des Kraftfahrzeuges und/oder mit Kenngrößen des Kraftfahrzeuges wie dessen Gewicht, in einem außerhalb des Kraftfahrzeuges liegenden Zentralrechner gespeichert werden, beispielsweise in einer Cloud.

Derartige zentral gespeicherte Informationen über manuelle Gangwechsel können dann auch von anderen Verkehrsteilnehmern genutzt werden, insbesondere bei entsprechenden Typenbezeichnungen des Getriebes, des Motors und/oder des Kraftfahrzeuges und/oder entsprechender Kenngrößen des anderen Kraftfahrzeuges wie dessen Gewicht. Umgekehrt kann der Fahrer des Kraftfahrzeuges auch von den Gangwechselinformationen anderer Fahrer profitieren.

Bevorzugt können daher von der Getriebesteuerungseinrichtung die in einem Zentralrechner, beispielsweise in einer Cloud, gespeicherten Daten abgefragt werden und bei einem Befahren einer bestimmten Position und einer bestimmten Strecke oder Richtung ein Gangwechsel oder Wechsel des vorgewählten Ganges, auf Basis der im Zentralrechner gespeicherten Daten eines Fahrereingriffs, insbesondere eines Kraftfahrzeuges mit gleicher Typenbezeichnung des Getriebes, des Motors und/oder des Kraftfahrzeuges und/oder entsprechender Kenngrößen, automatisiert durchgeführt werden.

## Patentansprüche

1. Getriebesteuerungseinrichtung für ein Kraftfahrzeug, zur Steuerung und/oder Regelung des Betriebs eines automatischen oder automatisierten Schaltgetriebes eines Kraftfahrzeuges, wobei durch die Getriebesteuerungseinrichtung abhängig von Zustandsdaten des Kraftfahrzeuges und/oder abhängig von einer aktuellen Position und einer Strecken- oder Richtungsinformation des Fahrzeuges ein Wechsel des Ganges durchgeführt wird,
**dadurch gekennzeichnet, dass** von der Getriebesteuerungseinrichtung das Ereignis eines Fahrereingriffs, der einen Wechsel des Ganges erforderlich macht, zusammen mit der aktuellen Position und mit der aktuellen Strecken- oder Richtungsinformation des Kraftfahrzeuges gespeichert wird und bei einem nachfolgenden Befahren derselben Position und derselben Strecke oder Richtung derselbe Wechsel des Ganges auf Basis der gespeicherten Daten automatisiert durchgeführt wird, abhängig davon ob der Fahrereingriff, der einen Wechsel des Ganges erforderlich macht, an der aktuellen Position und mit der aktuellen Strecken- oder Richtungsinformation mehrmals, zu verschiedenen Zeitpunkten, gespeichert wurde.

2. Getriebesteuerungseinrichtung nach Anspruch 1,
**dadurch gekennzeichnet, dass** der Fahrereingriffs, der einen Wechsel des Ganges erforderlich macht, eine Anforderung eines Drehmoments, einer Beschleunigung und/oder einer Geschwindigkeit ist, die mit dem aktuellen Gang nicht erreichbar ist, oder ein manueller Gangwechsel ist.

3. Getriebesteuerungseinrichtung nach Anspruch 1 oder 2,
**dadurch gekennzeichnet, dass** die aktuelle Position und/oder die aktuelle Strecken- oder Richtungsinformation des Kraftfahrzeuges durch ein Navigationssystem bereitgestellt wird.

4. Getriebesteuerungseinrichtung nach zumindest einem der vorhergehenden Ansprüche,
**dadurch gekennzeichnet, dass** von der Getriebesteuerungseinrichtung zusätzlich eine Identifizierung des Fahrers oder Fahrertyps gespeichert wird und bei einem nachfolgenden Befahren derselben Position und derselben Strecke oder Richtung derselbe Gangwechsel abhängig von einer Übereinstimmung einer Identifizierung des aktuellen Fahrers oder Fahrertyps mit der gespeicherten Identifizierung des Fahrers oder Fahrertyps automatisiert durchgeführt wird oder nicht durchgeführt wird.

## Claims

1. Transmission controller for a motor vehicle, for controlling and/or regulating the operation of an automatic or automated manual transmission of a motor vehicle, wherein the transmission controller performs a change of gear on the basis of state data of the motor vehicle and/or on the basis of a current position and a piece of route or direction information of the vehicle,
**characterized in that** the transmission controller stores the occurrence of a driver intervention necessitating a change of gear together with the current position and with the current route or direction information of the motor vehicle and, in the event of subsequent travel through/on/in the same position and the same route or direction, performs the same change of gear in automated fashion on the basis of the stored data, depending on whether the driver intervention necessitating a change of gear was stored at the current position and with the current route or direction information repeatedly, at different times.

2. Transmission controller according to Claim 1,
**characterized in that** the driver intervention necessitating a change of gear is a request for a torque, an acceleration and/or a speed that is not achievable with the current gear, or is a manual gear change.

3. Transmission controller according to Claim 1 or 2,
**characterized in that** the current position and/or the current route or direction information of the motor vehicle is provided by a navigation system.

4. Transmission controller according to at least one of the preceding claims, **characterized in that** the transmission controller additionally stores an identification of the driver or driver type and, in the event of subsequent travel through/on/in the same position and the same route or direction, performs or does not perform the same gear change in automated fashion on the basis of a match between an identification of the current driver or driver type and the stored identification of the driver or driver type.

## Revendications

1. Équipement de commande de transmission pour un véhicule automobile, pour la commande et/ou la régulation du fonctionnement d'une boite de vitesses automatique ou automatisée d'un véhicule automobile, dans lequel un changement de rapport est effectué par l'équipement de commande de transmission en fonction de données d'état du véhicule automobile et/ou en fonction d'une position actuelle et d'informations de trajet ou de direction du véhicule,
**caractérisé en ce que** l'équipement de commande de transmission mémorise l'événement d'une intervention du conducteur qui rend nécessaire un changement de rapport, conjointement avec la position actuelle et avec les informations de trajet ou de direction actuelles du véhicule automobile et, lors d'un déplacement ultérieur dans la même position et sur le même trajet ou dans la même direction, le même changement de rapport est effectué de manière automatisée sur la base des données mémorisées, en fonction de si l'intervention du conducteur qui rend nécessaire un changement de rapport a été mémorisée plusieurs fois, à des moments différents, dans la position actuelle et avec les informations de trajet ou de direction actuelles.

2. Équipement de commande de transmission selon la revendication 1, **caractérisé en ce que** l'intervention du conducteur qui rend nécessaire un changement de rapport est une demande de couple, d'accélération et/ou de vitesse qui ne peut pas être obtenue avec le rapport actuel, ou un changement de rapport manuel.

3. Équipement de commande de transmission selon la revendication 1 ou 2, **caractérisé en ce que** la position actuelle et/ou les informations de trajet ou de direction actuelles du véhicule automobile sont fournies par un système de navigation.

4. Équipement de commande de transmission selon au moins l'une quelconque des revendications précédentes, **caractérisé en ce que** l'équipement de commande de transmission mémorise en outre une identification du conducteur ou du type de conducteur et, lors d'un déplacement ultérieur dans la même position et sur le même trajet ou dans la même direction, le même changement de rapport est effectué ou n'est pas effectué de manière automatisée en fonction d'une correspondance entre une identification du conducteur ou du type de conducteur actuel et l'identification mémorisée du conducteur ou du type de conducteur.
